# EUROPÄISCHE PATENTANMELDUNG

(11) **EP 4 174 741 A1**
(43) Veröffentlichungstag der Anmeldung: **03.05.2023**
(21) Anmeldenummer: 22203185.8
(22) Anmeldetag: 24.10.2022
(51) Int. Cl.: G06Q 10/0631, G06Q 50/30, B60W 40/10, B60W 50/00

(54) **VERFAHREN ZUR BETRIEBSOPTIMIERUNG EINES KRAFTFAHRZEUGS**

(30) Priorität: 02.11.2021 DE 102021128456
(71) Anmelder: MAN Truck & Bus SE, 80995 München (DE)
(72) Erfinder: Weller, Ralf, 80995 München (DE); Kock, Peter, 80995 München (DE)
(74) Vertreter: v. Bezold & Partner Patentanwälte - PartG mbB

(57) **Zusammenfassung**

Die Erfindung betrifft unter anderem ein Verfahren zur Betriebsoptimierung eines Kraftfahrzeugs (10). Das Verfahren umfasst dabei ein Bereitstellen (S₁) einer Mehrzahl von Optimierungsmethoden (M₁, ..., M_{N}); ein Ermitteln (S₂) einer Fahrsituation des Kraftfahrzeugs (10); ein Auswählen (S₃) einer Optimierungsmethode aus der bereitgestellten Mehrzahl von Optimierungsmethoden (M₁, ..., M_{N}) in Abhängigkeit der ermitteln Fahrsituation des Kraftfahrzeugs (10); und ein Ermitteln (S₄) einer hinsichtlich eines vorgegebenen Zielkriteriums optimalen Betriebsweise des Kraftfahrzeugs (10) mittels der ausgewählten Optimierungsmethode. Ferner betrifft die Erfindung eine Steuervorrichtung (1), die zur Durchführung des Verfahrens eingerichtet ist, sowie ein Kraftfahrzeug (10) mit einer ebensolchen Steuervorrichtung (1).

## Beschreibung

Die Erfindung betrifft ein Verfahren zur Betriebsoptimierung eines Kraftfahrzeugs. Ferner betrifft die Erfindung eine Steuervorrichtung, die zur Durchführung des Verfahrens eingerichtet ist, sowie ein Kraftfahrzeug mit einer ebensolchen Steuervorrichtung.

Im Stand der Technik sind Verfahren zum Optimieren des Fahrbetriebs von Kraftfahrzeugen grundsätzlich bekannt. In der Regel wird hierbei über ein dynamisches, physikalisches Fahrzeug- und Umweltmodell eine Zielfunktion mit Nebenbedingungen formuliert, wobei anhand der Zielfunktion verschiedene Lösungsalternativen bewertet werden können und so eine hinsichtlich des formulierten Ziels optimale Betriebsstrategie für das Fahrzeug ermittelt werden kann. Lediglich beispielhaft kann dadurch eine Betriebsstrategie (z. B. in Form einer Geschwindigkeitstrajektorie) berechnet werden, welche z. B. den Schadstoffausstoß, den Verschleiß und/oder den Kraftstoffverbrauch des Fahrzeugs möglichst minimiert.

Nachteilig an den bisherigen Ansätzen ist dabei, dass diese zur Optimierung bzw. zur Berechnung einer Lösung zumeist nur einen einzigen vorgegebenen Optimierungsalgorithmus verwenden. Dies ist dahingehend problematisch, als dass die Schnelligkeit bzw. Robustheit der zur Optimierung verwendeten Methode stark von der jeweiligen Fahrsituation des Kraftfahrzeugs beeinflusst wird, was anhand des nachfolgenden Beispiels illustriert werden soll. So ist im Falle einer Bergauffahrt eines LKWs mit Verbrennungsmotor eine Optimierung z. B. mittels Heuristiken über die optimale Geschwindigkeit, Gangwahl und Schaltzeitpunkten, mitunter sehr komplex und nicht besonders robust zu implementieren. Im Gegensatz dazu sind geschlossene mathematische Verfahren (z. B. dynamische Programmierung) hier einfacher umzusetzen, da viele Bereiche eines möglichen Lösungsraumes (z. B. ein Rollen mit offenem Triebstrang oder ein Schubbetrieb etc.) ausscheiden, die in der praktischen Anwendung des Verfahrens oftmals Probleme (z. B. hinsichtlich Rechenzeit, Speicherverbrauch, Echtzeitfähigkeit) bereiten. Neben der Streckentopologie beeinflusst auch das Vorhandensein oder Nicht-Vorhandensein weiterer Verkehrsteilnehmer auf einem zu fahrenden Streckenabschnitt die Eignung einzelner Algorithmen zur Lösung des Optimierungsproblems, sodass insgesamt ein Bedarf an einer Lösung besteht, mittels welcher derartige Einflüsse mitberücksichtigt werden können.

Entsprechend ist es Aufgabe der Erfindung, eine Lösung für dieses Erfordernis bereitzustellen. Insbesondere ist es eine Aufgabe der Erfindung, eine verbesserte Technik zur Betriebsoptimierung eines Kraftfahrzeugs bereitzustellen, mittels derer die Nachteile der bisherigen Ansätze vermieden werden können.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der Erfindung ist dabei, dass der zur Optimierung verwendete Algorithmus bzw. die zur Optimierung verwendete Methode gezielt in Abhängigkeit einer vorliegenden Fahrsituation ausgewählt wird. Mit anderen Worten soll gerade nicht nur ausschließlich ein einziges Optimierungsverfahren (z. B. das Newtonverfahren) zur Lösung des Optimierungsproblems verwendet werden, sondern unter Berücksichtigung der situationsabhängigen Vor- und Nachteile der jeweiligen Verfahren das für die vorliegende Fahrsituation geeignetste Optimierungsverfahren aus einer Mehrzahl an möglichen Alternativen ausgewählt werden.

Gemäß einem ersten unabhängigen Aspekt wird dazu ein Verfahren bereitgestellt. Vorzugsweise handelt es sich bei dem Verfahren um ein Verfahren zur Betriebsoptimierung eines Kraftfahrzeugs (z. B. eines Nutzfahrzeugs). Das Verfahren weist hierbei ein Bereitstellen einer Mehrzahl von Optimierungsmethoden auf. D. h., bevorzugt können mehrere (alternative) Methoden (z. B. Algorithmen) bereitgestellt bzw. vorgegeben werden, mittels derer ein gegebenes Optimierungsproblem gelöst werden kann. Lediglich beispielhaft kann die Mehrzahl von Optimierungsmethoden z. B. folgende Methoden umfassen: dynamische Programmierung, Heuristik, gradientenbasiertes Newtonverfahren und/oder genetische Optimierung. Bevorzugt weist die Mehrzahl von Optimierungsmethoden dabei zumindest zwei, vorzugsweise zumindest drei, besonders bevorzugt zumindest vier oder zumindest fünf, Optimierungsmethoden auf.

Weiterhin umfasst das Verfahren ein Ermitteln einer Fahrsituation des Kraftfahrzeugs. Unter dem Begriff "Fahrsituation" kann dabei bevorzugt eine Klassifikation verstanden werden, die einen Fahrbetrieb und/oder einen vorausliegenden Streckenabschnitt hinsichtlich für die Fahrzeugführung relevanter Gegebenheiten charakterisiert. Beispielsweise kann es sich bei der ermittelten Fahrsituation z. B. um eine Bergabfahrt, einen Stau oder eine anstehende Befahrung einer Doppelkuppe, d. h. zweier benachbarter durch ein Tal getrennter Hügel, handeln. Das Ermitteln der Fahrsituation kann ferner z. B. auf Grundlage von sensorisch erfasster Fahrzeug- und/oder Umgebungsdaten erfolgen. Zudem oder alternativ können zum Ermitteln der Fahrsituation auch mehrere Fahrsituationsklassen vorgebeben werden, anhand derer die (aktuelle) Fahrsituation ermittelt wird. So kann das Verfahren z. B. ein Bereitstellen einer Mehrzahl von Fahrsituationen umfassen, wobei dann beim Ermitteln der Fahrsituation ein Ermitteln bzw. Identifizieren der Fahrsituation aus der bereitgestellten Mehrzahl von Fahrsituationen (Klassen) erfolgen kann. Beispielsweise kann dabei eine Fahrsituation aus der bereitgestellten Mehrzahl ausgewählt (ermittelt) werden, welche den aktuellen Gegebenheiten am nächsten kommt.

Ferner umfasst das Verfahren ein Auswählen einer Optimierungsmethode aus der bereitgestellten Mehrzahl von Optimierungsmethoden in Abhängigkeit von der ermitteln Fahrsituation des Kraftfahrzeugs. Bevorzugt handelt es sich bei der ausgewählten Optimierungsmethode um eine in Hinblick auf die ermittelte Fahrsituation möglichst vorteilhafte bzw. geeignete Methode zur Optimierung. Anders ausgedrückt kann in diesem Schritt eine (gezielte) Auswahl einer, vorzugsweise möglichst geeigneten, Optimierungsmethode aus den mehreren bereitgestellten bzw. vorgegebenen Optimierungsmethoden auf Grundlage der zuvor ermittelten Fahrsituation erfolgen, z. B. weil die gewählte Methode bei der ermittelten Fahrsituation besonders schnell ein Optimierungsergebnis liefert. Beispielsweise kann sich im Fall der vorstehend beschriebenen exemplarischen Fahrsituation einer Bergauffahrt eines LKWs mit Verbrennungsmotor eine geschlossene mathematische Optimierungsmethode (z. B. dynamische Programmierung) besonders vorteilhaft sein, da viele Bereiche eines möglichen Lösungsraumes in dieser speziellen Fahrsituation (wie z. B. ein Rollen mit offenem Triebstrang oder ein Schubbetrieb etc.) ausscheiden, sodass in dieser Fahrsituation (Bergauffahrt) bevorzugt z. B. die dynamische Programmierung als Optimierungsmethode ausgewählt wird. Hierbei kann das Auswählen der Optimierungsmethode z. B. auf Basis vorgegebener Auswahlkriterien erfolgen. Alternativ dazu kann das Auswählen auch das Ergebnis eines (gesonderten) Optimierungsprozesses hinsichtlich einer möglichst optimale Optimierungsmethodenauswahl sein, was nachfolgend noch eingehender beschrieben werden wird.

Weiterhin umfasst das Verfahren ein Ermitteln einer hinsichtlich eines vorgegebenen Zielkriteriums (z. B. hinsichtlich minimaler Betriebskosten) optimalen bzw. optimierten Betriebsweise (z. B. Fahrbetriebsweise) des Kraftfahrzeugs mittels der ausgewählten Optimierungsmethode. Das vorgenannte Ermitteln der optimalen Betriebsweise kann somit als ein - an sich bekanntes - Anwenden einer (vorliegend gezielt ausgewählten) Optimierungsmethode zur Lösung bzw. Optimierung eines gegebenen Problems (z. B. ein möglichst verbrauchsarmer Betrieb) verstanden werden. Lediglich beispielhaft kann das Ermitteln der optimalen Betriebsweise dabei je nach Anwendungsfall z. B. ein Ermitteln einer (z. B. verbrauchsoptimierten) Geschwindigkeitstrajektorie und/oder einer (z. B. kostenoptimierten) zeitlichen Abfolge von Betriebsarten des Antriebsstrangs des Fahrzeugs (Leerlaufbetrieb, Boost-Betrieb, Bremsrekuperation etc.) umfassen. Gemäß dem üblichen Vorgehen kann das Ermitteln der optimalen Betriebsweise hierbei z. B. auf Basis einer mathematischen Zielfunktion erfolgen, welche mittels Variablen beschreibt, welches Ziel bei einer Optimierung erreicht werden soll.

Insgesamt ermöglicht die vorgenannte Merkmalskombination auf vorteilhafte Weise ein (fahr-)situationsabhängiges Anpassen des Optimierungsverfahrens, wobei die situationsabhängigen Vor- und Nachteile der jeweiligen Optimierungsmethoden berücksichtig werden können, sodass für die vorliegende Fahrsituation möglichst das geeignetste Optimierungsverfahren zur Berechnung verwendet werden kann.

Gemäß einem ersten Aspekt kann das vorgegebene Zielkriterium eine Minimierung von Betriebskosten des Kraftfahrzeugs umfassen. D. h., bei der hinsichtlich des vorgegebenen Zielkriteriums ermittelten optimalen bzw. optimierten Betriebsweise kann es sich um eine "kostenoptimierte Betriebsweise" des Kraftfahrzeugs handeln. Die Betriebskosten des Kraftfahrzeugs können dabei z. B. Verbrauchskosten (z. B. Kraftstoff und/oder Energie), Leasingkosten, Mautkosten und/oder Fahrerkosten umfassen. Auf vorteilhafte Weise kann damit ein möglichst kostengünstiger Betrieb des Kraftfahrzeugs ermittelt werden.

Nach einem weiteren Aspekt kann das Ermitteln der optimalen Betriebsweise des Kraftfahrzeugs ein Berechnen einer hinsichtlich des vorgegebenen Zielkriteriums (z. B. minimaler Betriebskosten) optimalen Geschwindigkeit des Kraftfahrzeugs umfassen. Bevorzugt kann es sich somit bei der mittels der ausgewählten Optimierungsmethode zu optimierenden Betriebsgröße des Kraftfahrzeugs um die Geschwindigkeit des Kraftfahrzeugs handeln. Beispielsweise kann die optimierte (z. B. kostenoptimierte) Geschwindigkeit des Kraftfahrzeugs in Form einer Geschwindigkeitstrajektorie ermittelt bzw. berechnet werden, wobei die Geschwindigkeitstrajektorie die Geschwindigkeit in Abhängigkeit eines Ortes und/oder einer Zeit, d. h. einen Geschwindigkeitsverlauf, angeben kann.

Zudem oder alternativ kann das Ermitteln der optimalen Betriebsweise des Kraftfahrzeugs auch ein Berechnen einer hinsichtlich des vorgegebenen Zielkriteriums (z. B. minimaler Betriebskosten) optimierten Gangeinstellung und/oder Getriebeeinstellung des Kraftfahrzeugs umfassen. Bevorzugt kann es sich somit bei der mittels der ausgewählten Optimierungsmethode zu optimierenden Betriebsgröße des Kraftfahrzeugs um die Gang- bzw. Getriebeeinstellung des Kraftfahrzeugs handeln. Lediglich beispielhaft kann die optimierte (z. B. kostenoptimierte) Gangeinstellung des Kraftfahrzeugs in Form einer Gangtrajektorie ermittelt bzw. berechnet werden, wobei die Gangtrajektorie die Gangeinstellung (z. B. Gangnummer) in Abhängigkeit eines Ortes und/oder einer Zeit, d. h. den Schaltverlauf, angeben kann.

Gemäß einem weiteren Aspekt kann die bereitgestellte Mehrzahl von Optimierungsmethoden zumindest eine der folgenden Methoden umfassen: dynamische Programmierung, Heuristik, gradientenbasiertes Newtonverfahren, genetische Optimierung, neuronales Netz und Monte-Carlo-Simulation. Die Verwendung einer oder mehrerer dieser - an sich bekannten Optimierungsmethoden - hat sich im Zusammenhang mit dem beanspruchten Verfahren als besonders vorteilhaft erwiesen. Hierbei sei nochmals darauf verwiesen, dass unter dem Ausdruck "Optimierungsmethode" bevorzugt eine allgemeine Vorschrift (z. B. in Form eines Algorithmus bzw. Handlungsanweisungen) zur Lösung einer Klasse von Problemen verstanden werden soll. Insbesondere kann als Optimierungsmethode dabei ein Lösungsverfahren verstanden werden, mittels welchem eine gegebene Zielfunktion (Gütefunktional) minimiert oder maximiert werden kann.

Um auf vorteilhafte Weise eine in Bezug auf die ermittelte Fahrsituation des Kraftfahrzeugs möglichst geeignete Optimierungsmethode zu verwenden, kann - nach einem weiteren Aspekt - das Auswählen der Optimierungsmethode auf Basis einer vorgegebenen (z. B. zuvor festgelegten) Zuordnung erfolgen. Die Zuordnung (z. B. in Form einer Tabelle) kann dabei eine Zuordnung zwischen Fahrsituationen und Optimierungsmethoden sein, wobei bevorzugt jede der (möglichen) Fahrsituationen jeweils eine der bereitgestellten Optimierungsmethoden zugeordnet ist. Beispielsweise kann der Fahrsituation "Bergauffahrt" die Methode "dynamische Programmierung" und/oder der Fahrsituation "Stadtverkehr" die Methode "Heuristik" zugeordnet sein. Hierbei kann das (erstmalige) Festlegen der Zuordnung z. B. mittels entsprechender Vorversuche (mehrmaliges Optimieren einer vorgebeben Fahrsituation mittels der bereitgestellten Optimierungsmethoden) und/oder auf Basis bekannter Vor- und Nachteile der entsprechenden Optimierungsmethode erfolgen. Der Vorteil dieser Variante ist hierbei, dass durch die vorgegebene Zuordnung möglichst schnell eine entsprechende Optimierungsmethode für die ermittelte Fahrsituation ausgewählt bzw. zum anschließenden Ermitteln der optimalen Betriebsweise des Kraftfahrzeugs zur Verfügung gestellt werden kann.

Gemäß einem weiteren Aspekt kann die vorgegebene Zuordnung statisch sein. D. h., die vorgegebene Zuordnung kann somit bevorzugt während eines Betriebs des Kraftfahrzeugs nicht verändert werden. Zudem oder alternativ kann die vorgegebene Zuordnung jedoch auch dynamisch sein. Mit anderen Worten kann die (anfänglich) vorgegebene Zuordnung bevorzugt veränderbar bzw. an ggf. variierende Gegebenheiten anpassbar sein. Besonders bevorzugt kann dabei ein Adaptieren der vorgegebenen Zuordnung während eines Betriebs des Kraftfahrzeugs mittels eines neuronalen Netzes erfolgen. Auf vorteilhafte Weise kann so (z. B. durch ein Online-Training des neuronalen Netzes) die Zuordnung und damit die Auswahl einer möglichst geeigneten Optimierungsmethode ständig verbessert werden.

Da mit einer (festen) Zuordnung zwischen vorgegebenen Fahrsituationen und entsprechenden Optimierungsmethoden insbesondere in Grenzfällen ggf. nicht immer die geeignetste Auswahl ermittelt werden kann, kann nach einem weiteren Aspekt das Auswählen der Optimierungsmethode ferner folgenden Schritt umfassen: Ermitteln einer hinsichtlich eines vorgegebenen weiteren Zielkriteriums optimalen Optimierungsmethode aus der bereitgestellten Mehrzahl von Optimierungsmethoden. Entsprechend kann das Auswählen der, vorzugsweise geeignetsten, Optimierungsmethode bevorzugt selbst ein Optimierungsprozess bzw. Optimierungsproblem sein. Mit anderen Worten kann die auszuwählende Optimierungsmethode mittels Optimierung bezüglich eines vorgegebenen Zielkriteriums (z. B. hinsichtlich kürzester Rechenzeit) aus den bereitgestellten mehreren Optimierungsmethoden ermittelt werden. Hierbei können wiederum bekannte Optimierungsverfahren, z. B. genetische Optimierung, verwendet werden.

Gemäß einem weiteren Aspekt kann die hierin erwähnte Fahrsituation einen Fahrbetrieb und/oder einen vorausliegenden Streckenabschnitt hinsichtlich für die Fahrzeugführung relevanter Gegebenheiten charakterisieren. Lediglich beispielhaft kann dies z. B. auf Grundlage topographischer Informationen (wie z. B. Steigung und/oder Krümmung) des vorausliegenden Streckenabschnitts erfolgen. Zudem oder alternativ können hierzu auch Verkehrsinformationen (wie z. B. Verkehrsdichte und/oder Abstand zu einem vorausfahrenden Fahrzeug), Wetterinformationen (wie z. B. Auftreten von Regen und/oder Schnee) und/oder sonstige die Fahrzeugführung beeinflussende Informationen (wie z. B. Geschwindigkeitsbeschränkungen, Tageszeit und/oder Lenkzeiten des Fahrers) berücksichtigt werden. Wie vorstehend bereits erwähnt worden ist, ermöglicht das Einbeziehen dieser Faktoren in die Betriebsoptimierung eines Kraftfahrzeugs auf vorteilhafte Weise eine möglichst (fahr-)situationsangepasste Optimierung des Fahrbetriebs des Kraftfahrzeugs.

Nach einem weiteren Aspekt kann das Verfahren ferner ein Empfangen von Fahrzeugdaten und/oder Umgebungsdaten (z. B. über eine Kommunikationsschnittstelle) umfassen. Die Fahrzeug- und/oder Umgebungsdaten können dabei z. B. von Sensoreinrichtungen und/oder Steuergeräten des Kraftfahrzeugs empfangen werden. Zudem oder alternativ können die Fahrzeug- und/oder Umgebungsdaten auch von einer fahrzeugexternen Einrichtung, wie z. B. einem weiteren Fahrzeug, einem Satelliten und/oder einer Leitstelle, empfangen werden. Bevorzugt betreffen die Fahrzeugdaten hierbei das Kraftfahrzeug selbst, wohingegen die Umgebungsdaten das äußere Umfeld des Kraftfahrzeugs betreffen. Lediglich beispielhaft können die Fahrzeugdaten hierbei Informationen zu Geschwindigkeit, Lenkeinschlag und/oder Beschleunigung umfassen, während die Umgebungsdaten z. B. Streckendaten (z. B. Steigung/Gefälle) und/oder Verkehrsdaten (z. B. Stauaufkommen) umfassen können. Weiterhin kann vorgesehen sein, dass das Ermitteln der Fahrsituation des Kraftfahrzeugs auf Grundlage der empfangenen Fahrzeugdaten und/oder Umgebungsdaten erfolgt. Beispielsweise kann auf Grundlage der empfangenen Fahrzeugdaten und/oder Umgebungsdaten ein Ermitteln bzw. Identifizieren der Fahrsituation aus einer Mehrzahl vorgegebener, d. h. zuvor festgelegter, Fahrsituationen (Klassen) erfolgen. Auf vorteilhafte Weise kann durch das Berücksichtigen einer entsprechenden Vielzahl an Daten bzw. Informationen die vorliegende Fahrsituation möglichst zuverlässig ermittelt werden.

Gemäß einem weiteren Aspekt können die Fahrzeugdaten hierbei zumindest eine der folgenden Informationen betreffend das Kraftfahrzeug umfassen: eine Geschwindigkeit, ein Lenkeinschlag, eine Beschleunigung und einen Betrieb von Nebenaggregaten. Zudem oder alternativ können die Streckendaten zumindest eine der folgenden Informationen zur Fahrstrecke des Kraftfahrzeugs umfassen: eine Steigung, ein Gefälle, eine Krümmung, ein Höhenprofil, eine Anzahl an Fahrspuren und einen Straßentyp. Zudem oder alternativ können die Verkehrsdaten zumindest eine der folgenden Informationen zur Verkehrslage beim Kraftfahrzeugs umfassen: eine Verkehrsdichte, einen Verkehrsfluss, einen Abstand zu einem vorausfahrenden Fahrzeug, ein Unfallaufkommen und ein Stauaufkommen.

Nach einem weiteren Aspekt kann das vorgegebene Zielkriterium (z. B. ein möglichst geräuscharmer Betrieb des Kraftfahrzeugs) unabhängig von der ausgewählten Optimierungsmethode sein. D. h., durch die Auswahl einer Optimierungsmethode aus der bereitgestellten Mehrzahl von Optimierungsmethoden kann bevorzugt lediglich die Methodik, wie anschließend die Betriebsweise des Kraftfahrzeugs optimiert wird, beeinflusst werden, nicht jedoch das hierbei zu lösende Optimierungsproblem (Zielkriterium bzw. Zielfunktion). Beispielsweise kann unabhängig davon, welche Optimierungsmethode letztlich gewählt wird, in allen Fällen eine Minimierung der Betriebskosten des Kraftfahrzeugs erfolgen.

Zudem oder alternativ kann beim Ermitteln der optimalen Betriebsweise des Kraftfahrzeugs eine Zielfunktion verwendet werden, die unabhängig von der ausgewählten Optimierungsmethode ist. Entsprechend soll auch hier bevorzugt durch die Festlegung auf eine Optimierungsmethode (Auswahl) lediglich die Art und Weise, wie anschließend die Betriebsweise des Kraftfahrzeugs optimiert wird, beeinflusst werden, nicht jedoch das zu lösende Optimierungsproblem. Insbesondere soll damit bevorzugt nicht jede der Mehrzahl von Optimierungsmethoden mit einer eigenen Zielfunktion bzw. Zielkriterium verknüpft sein. Im Einzelfall kann jedoch auch vorgesehen sein, dass jede der bereitgestellten Optimierungsmethoden eine andere Zielfunktion (Gütefunktional) und/oder andere Gewichtungen der Zielfunktion (Gütefunktional) verwendet.

Gemäß einem weiteren Aspekt kann das Verfahren in, vorzugsweise regelmäßigen, Zeitabständen während eines Betriebs des Kraftfahrzeugs durchgeführt werden. D. h., das Verfahren kann bevorzugt zyklisch durchgeführt werden. Beispielsweise kann das Verfahren alle drei Minuten durchgeführt werden. Auf vorteilhafte Weise können so mögliche Veränderungen der (aktuellen) Fahrsituation möglichst zeitnah ermittelt werden und die Optimierung des Betriebs des Kraftfahrzeugs entsprechend angepasst werden. Zudem oder alternativ kann das Verfahren auch streckenabschnittsweise während eines Betriebs des Kraftfahrzeugs durchgeführt werden. Beispielsweise kann das Verfahren jeweils nach einem Durchfahren eines, vorzugsweise vorbestimmten, Streckenabschnitts bzw. Segments der Fahrroute für den nachfolgenden Streckenabschnitt durchgeführt werden. Die Einteilung bzw. Bestimmung der Streckenabschnitte kann dabei z. B. auf Grundlage einer Routenplanung durch ein Navigationssystem erfolgen. Zudem oder alternativ kann die Segmentierung der Fahrroute in Streckenabschnitte auch zusammen mit der Ermittlung der Fahrsituation des Kraftfahrzeugs erfolgen, beispielsweise indem neben der Ermittlung der Art der Fahrsituation (z. B. "Bergauffahrt") sogleich auch die Länge/Dauer dieser Fahrsituation ("die nächsten 2km") erfolgt.

Nach einem weiteren Aspekt kann das Verfahren ferner ein Betreiben des Kraftfahrzeugs gemäß der ermittelten optimalen Betriebsweise umfassen. Dies kann dabei bevorzugt ein entsprechendes Ansteuern von Kraftfahrzeugkomponenten (wie z. B. Motor, Getriebe, Nebenaggregate etc.) umfassen, um dadurch die zuvor ermittelte Betriebsweise (z. B. einen hinsichtlich der Betriebskosten optimierten Geschwindigkeitsverlauf) zu realisieren.

Gemäß einem weiteren unabhängigen Aspekt wird ferner eine Steuervorrichtung bereitgestellt. Die Steuervorrichtung (z. B. ein Steuergerät) ist dabei eingerichtet, ein Verfahren, wie in diesem Dokument beschrieben, auszuführen. D. h., die Steuervorrichtung kann bevorzugt zur Durchführung des Verfahrens, wie in diesem Dokument beschrieben, ausgebildet sein. Entsprechend sollen alle im Zusammenhang mit dem Verfahren beschriebenen Merkmale, auch im Zusammenhang mit der Steuervorrichtung, offenbart und beanspruchbar sein. Entsprechendes soll auch umgekehrt gelten. Weiterhin kann die Steuervorrichtung - für derartige Steuergeräte im Allgemeinen übliche Komponenten - wie z. B. einen Prozessor, eine oder mehrere Kommunikationsschnittstellen (Dateneingänge/Signalausgänge) und/oder einen Speicher aufweisen.

Nach einem weiteren unabhängigen Aspekt wird ein Kraftfahrzeug bereitgestellt, wobei das Kraftfahrzeug eine Steuervorrichtung, wie in diesem Dokument beschrieben, umfasst. Bevorzugt ist das Kraftfahrzeug ein Nutzfahrzeug, d. h. ein (Kraft-)Fahrzeug, das durch seine Bauart und Einrichtung speziell zur Beförderung zum Transport von Gütern und/oder zum Ziehen eines oder mehrerer Anhängerfahrzeuge ausgelegt ist. Beispielsweise kann das Kraftfahrzeug ein Lastkraftwagen, ein Sattelzug und/oder ein Omnibus sein. Das Kraftfahrzeug kann hierbei ferner zumindest eine Sensoreinrichtung umfassen, die ausgebildet ist, Fahrzeug- und/oder Umgebungsdaten zu erfassen und/oder (z. B. über eine Signalleitung) an die Steuervorrichtung auszugeben. Zudem oder alternativ kann das Kraftfahrzeug auch zumindest ein Steuergerät aufweisen, das eingerichtet ist, Fahrzeug- und/oder Umgebungsdaten (z. B. über eine Signalleitung) an die Steuervorrichtung auszugeben. Zudem oder alternativ kann das Kraftfahrzeug auch zumindest eine Kommunikationseinrichtung umfassen, die ausgebildet ist, Fahrzeug- und/oder Umgebungsdaten von einer fahrzeugexternen Einrichtung, wie z. B. einem weiteren Fahrzeug, einem Satelliten und/oder einer Leitstelle, zu empfangen und/oder (z. B. über eine Signalleitung) an die Steuervorrichtung auszugeben.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: ein Flussdiagramm eines Verfahrens zur Betriebsoptimierung eines Kraftfahrzeugs gemäß einer ersten Ausführungsform;
- Figur 2:: eine schematische Darstellung einer Steuervorrichtung gemäß einer Ausführungsform; und
- Figur 3:: eine schematische Darstellung eines Kraftfahrzeugs gemäß einer Ausführungsform.

Gleiche oder funktional äquivalente Elemente sind in allen Figuren mit denselben Bezugszeichen beschrieben und zum Teil nicht gesondert beschrieben.

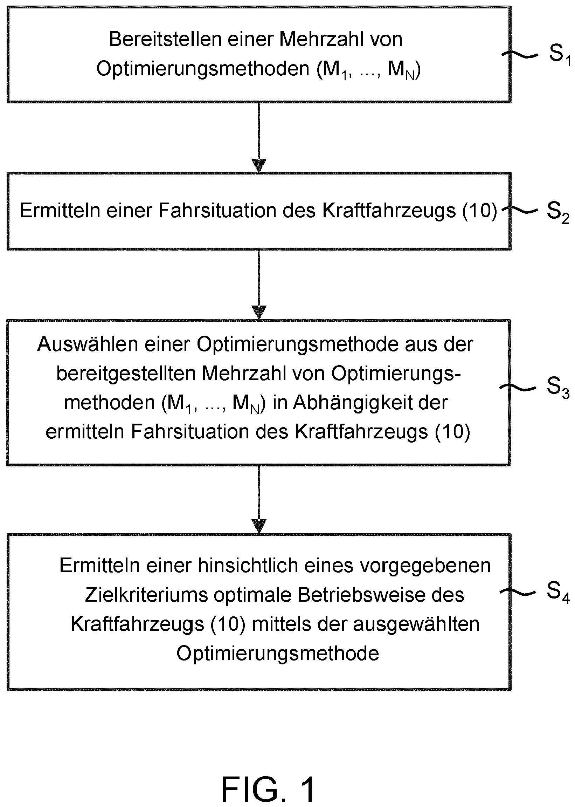

Figur 1 zeigt ein Flussdiagramm eines, vorzugsweise computerimplementieren, Verfahrens zur Betriebsoptimierung eines Kraftfahrzeugs 10 (z. B. eines Nutzfahrzeugs) gemäß einer ersten Ausführungsform. Das Verfahren kann somit auch als ein Verfahren zur Optimierung des Betriebs bzw. der Betriebsweise des Kraftfahrzeugs 10 verstanden werden. Das Verfahren kann dabei beispielsweise von einer (z. B. im Kraftfahrzeug 10 verbauten) Steuervorrichtung 1 ausgeführt werden. Im Schritt S₁ erfolgt dabei ein Bereitstellen (z. B. Vorgeben) einer Mehrzahl von Optimierungsmethoden M₁, ..., M_{N}. Bevorzugt handelt es sich hierbei um verschiedene Optimierungsmethoden (z. B. Algorithmen), welche z. B. jeweils in Bezug auf Schnelligkeit, Robustheit und/oder benötigten Speicherplatz unterschiedliche Vor- und Nachteile besitzen. Lediglich beispielhaft kann die Mehrzahl von Optimierungsmethoden z. B. folgende Methoden umfassen: dynamische Programmierung, Heuristik, gradientenbasiertes Newtonverfahren und/oder genetische Optimierung. Hierbei versteht sich, dass bevorzugt jede der Optimierungsmethoden der Mehrzahl von Optimierungsmethoden M₁, ..., M_{N} jeweils eine Optimierungsmethode zur Betriebsoptimierung des Kraftfahrzeugs 10 ist.

Im Schritt S₂ erfolgt ein Ermitteln einer Fahrsituation des Kraftfahrzeugs 10. Beispielsweise kann dies durch eine Klassifikationseinheit 1.2 der Steuervorrichtung 1 erfolgen. Bevorzugt handelt es sich beim vorgenannten Ermitteln um ein Ermitteln einer Fahrsituation des Kraftfahrzeugs 10 aus einer vorgebeben Mehrzahl an Fahrsituationen (Klassen). Mögliche Fahrsituationen können dabei z. B. "Bergauffahrt", "Bergabfahrt", "Stau" oder "Stadtverkehr" sein. In diesem Zusammenhang kann das Verfahren ferner ein Empfangen von Fahrzeugdaten und/oder Umgebungsdaten (z. B. von einer fahrzeugexternen Einrichtung 3 und/oder von einer Sensoreinrichtung 2.2 des Kraftfahrzeugs 10) umfassen, wobei das Ermitteln (S₂) der Fahrsituation des Kraftfahrzeugs 10 sodann auf Grundlage der empfangenen Fahrzeugdaten und/oder Umgebungsdaten erfolgen kann. Lediglich beispielhaft können die Fahrzeugdaten hierbei Informationen zu Geschwindigkeit, Lenkeinschlag und/oder Beschleunigung umfassen, während die Umgebungsdaten z. B. Streckendaten (z. B. Straßentyp) und/oder Verkehrsdaten (z. B. Verkehrsdichte) umfassen können.

Im Schritt S₃ erfolgt ein Auswählen einer Optimierungsmethode aus der bereitgestellten Mehrzahl von Optimierungsmethoden M₁, ..., M_{N} in Abhängigkeit der ermitteln Fahrsituation des Kraftfahrzeugs 10. Beispielsweise kann dies durch eine Selektoreinheit 1.3 der Steuervorrichtung 1 erfolgen. Bevorzugt handelt es sich bei der ausgewählten Optimierungsmethode um eine in Hinblick auf die ermittelte Fahrsituation möglichst vorteilhafte bzw. geeignete Methode zur Optimierung. Lediglich beispielhaft kann das Auswählen der Optimierungsmethode dabei auf Basis einer vorgegebenen Zuordnung (z. B. in Form einer Tabelle) zwischen Fahrsituationen und Optimierungsmethoden erfolgen. So kann beispielsweise der Fahrsituation "Bergauffahrt" die Optimierungsmethode M₁ ("dynamische Programmierung") und/oder der Fahrsituation "Stadtverkehr" die Optimierungsmethode M₂ ("Heuristik") zugeordnet sein. Auf vorteilhafte Weise kann so möglichst schnell eine entsprechende Optimierungsmethode für die ermittelte Fahrsituation ausgewählt werden.

Im Schritt S₄ erfolgt ein Ermitteln einer hinsichtlich eines vorgegebenen Zielkriteriums (z. B. hinsichtlich minimaler Betriebskosten) optimalen bzw. optimierten Betriebsweise (z. B. Fahrbetriebsweise) des Kraftfahrzeugs 10 mittels der ausgewählten Optimierungsmethode. Beispielsweise kann dies durch eine Optimiereinheit 1.3 der Steuervorrichtung 1 erfolgen. Unter dem Ausdruck "Betriebsweise" kann dabei bevorzugt die Art verstanden werden, wie zumindest eine Komponente des Kraftfahrzeugs (z. B. das Getriebe) und/oder zumindest eine den Betrieb des Kraftfahrzeugs repräsentierende Größe (z. B. die Gangeinstellung) eingestellt, gesteuert und/oder variiert wird. Lediglich beispielhaft kann das Ermitteln der optimalen Betriebsweise z. B. ein Ermitteln einer (z. B. leistungsoptimierten) Antriebsmomentverteilung und/oder einer (z. B. emissionsoptimierten) Motorsteuerung umfassen. Gemäß dem üblichen Vorgehen kann das Ermitteln der optimalen Betriebsweise hierbei z. B. auf Grundlage einer mathematischen Zielfunktion (Gütefunktional) erfolgen, welche z. B. mittels Gewichtungsfaktoren und Variablen beschreibt, welches Ziel (Zielkriterium) bei einer Optimierung insgesamt erreicht werden soll. Das Ermitteln der optimalen Betriebsweise kann dabei ferner modellprädiktive Verfahren und/oder Verfahren der Online-Optimierung umfassen.

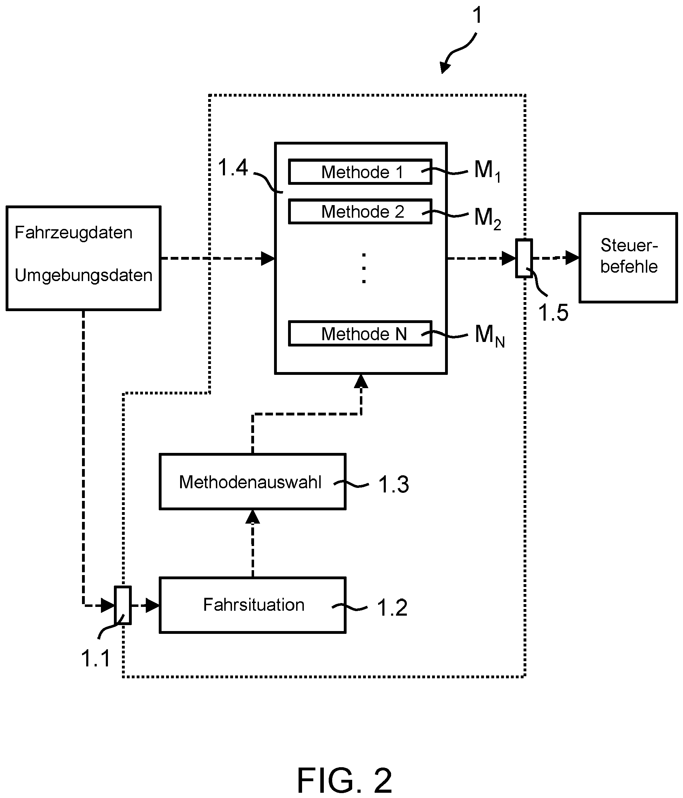

Figur 2 zeigt eine schematische Darstellung einer Steuervorrichtung 1 gemäß einer Ausführungsform. Die Steuervorrichtung 1 (z. B. ein Steuergerät) ist dabei eingerichtet, ein Verfahren, wie in diesem Dokument beschrieben, auszuführen. Es versteht sich somit, dass die unter Bezugnahme auf die Figur 2 beschriebenen Techniken und Merkmale mit den Techniken und Merkmalen, die unter Bezugnahme auf die Figur 1 beschrieben sind, kombinierbar sind, einzeln oder in jeglicher Kombination. Die Steuervorrichtung 1 kann dabei - neben im Allgemeinen bei derartigen Vorrichtungen üblichen Komponenten, wie z. B. einen Prozessor und/oder einen Speicher - eine erste Kommunikationsschnittstelle 1.1 aufweisen, die ausgebildet ist, das Kraftfahrzeug 10 betreffende Fahrzeugdaten und/oder das äußere Umfeld des Kraftfahrzeugs 10 betreffende Umgebungsdaten (Streckendaten und/oder Verkehrsdaten) zu empfangen. Weiterhin kann die Steuervorrichtung 1 eine Klassifikationseinheit 1.2 umfassen, die ausgebildet ist, eine Fahrsituation des Kraftfahrzeugs 10 zu ermitteln. Beispielsweise kann die Klassifikationseinheit 1.2 die Fahrsituation des Kraftfahrzeugs 10 in Abhängigkeit von den empfangenen Fahrzeugdaten und/oder Umgebungsdaten ermitteln. Lediglich beispielhaft kann die Klassifikationseinheit 1.2 ausgebildet sein, die Fahrsituation des Kraftfahrzeugs 10 aus einer vorgegebenen Mehrzahl an Fahrsituationen bzw. Fahrsituationsklassen, vorzugsweise auf Grundlage der Fahrzeugdaten und/oder Umgebungsdaten, auszuwählen bzw. zu identifizieren. Ferner kann die Steuervorrichtung 1 eine Selektoreinheit 1.3 umfassen, die ausgebildet ist, eine Optimierungsmethode aus einer (z. B. in einem Speicher der Steuervorrichtung 1) bereitgestellten Mehrzahl von Optimierungsmethoden M₁, ..., M_{N} in Abhängigkeit von den ermitteln Fahrsituationen des Kraftfahrzeugs 10 auszuwählen. Die Selektoreinheit 1.3 kann somit bevorzugt ausgebildet sein, auf Grundlage der ermitteln Fahrsituation eine speziell für diese Fahrsituation geeignete Optimierungsmethode aus der Mehrzahl von Optimierungsmethoden M₁, ..., M_{N} auszuwählen, z. B. weil die gewählte Methode bei der ermittelten Fahrsituation besonders schnell ein Optimierungsergebnis liefert. Weiterhin kann die Steuervorrichtung 1 eine Optimiereinheit 1.4 umfassen, die ausgebildet ist, mittels der ausgewählten Optimierungsmethode eine hinsichtlich eines vorgegebenen Zielkriteriums (z. B. hinsichtlich möglichst geringer Betriebskosten des Kraftfahrzeugs 10) optimale Betriebsweise des Kraftfahrzeugs 10 zu ermitteln. Anders ausgedrückt kann das Ermitteln der optimalen Betriebsweise bevorzugt auch als ein Anwenden der (gezielt) ausgewählten Optimierungsmethode zur Lösung bzw. Optimierung eines gegebenen Problems (z. B. ein möglichst kostenarmer Betrieb) verstanden werden. Lediglich beispielhaft kann das Ermitteln der optimalen Betriebsweise dabei je nach Anwendungsfall z. B. ein Ermitteln einer (z. B. verbrauchsoptimierten) Geschwindigkeitstrajektorie und/oder einer (z. B. kostenoptimierten) zeitlichen Abfolge von Betriebsarten des Antriebsstrangs des Fahrzeugs (Leerlaufbetrieb, Boost-Betrieb, Bremsrekuperation etc.) umfassen. Weiterhin kann die Steuervorrichtung 1 eine zweite Kommunikationsschnittstelle 1.5 aufweisen, die ausgebildet ist, die ermittelte optimale Betriebsweise und/oder entsprechende Steuerbefehle zum Betreiben des Kraftfahrzeugs 10 bzw. dessen Komponenten gemäß der ermittelten optimalen Betriebsweise auszugeben.

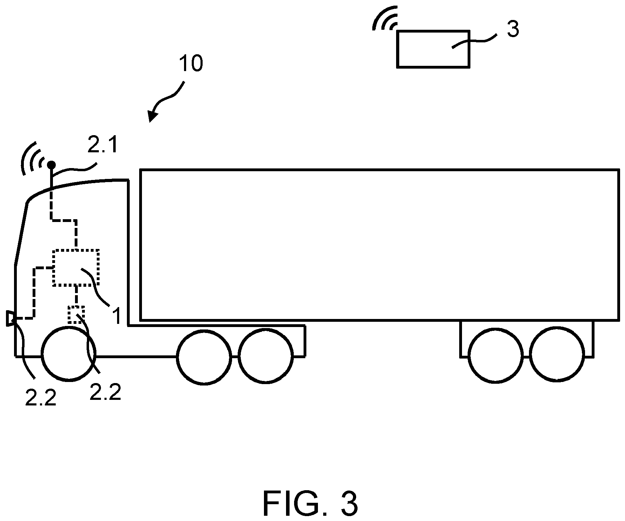

Figur 3 zeigt eine schematische Darstellung eines Kraftfahrzeugs 10 gemäß einer Ausführungsform. Bei dem Kraftfahrzeug 10 handelt es sich vorliegend lediglich beispielhaft um eine Sattelzugmaschine. Das Kraftfahrzeug 10 umfasst hierbei eine Steuervorrichtung 1, welche eingerichtet ist, ein Verfahren, wie in diesem Dokument beschrieben, auszuführen. Hierbei kann die Steuervorrichtung 1 (z. B. über entsprechende Signalverbindungen) mit einer Kommunikationseinrichtung 2.1 und/oder zumindest einer Sensoreinrichtung 2.2 des Kraftfahrzeugs 10 verbunden sein. Von der Kommunikationseinrichtung 2.1 und/oder der zumindest einen Sensoreinrichtung 2.2 kann die Steuervorrichtung 1 das Kraftfahrzeug 10 betreffende Fahrzeugdaten (z. B. Geschwindigkeit, Lenkeinschlag etc.) und/oder das äußere Umfeld des Kraftfahrzeugs 10 betreffende Umgebungsdaten (Abstand zu einem vorausfahrenden Fahrzeug, Straßentyp etc.) empfangen. Auf Grundlage der empfangenen Fahrzeugdaten und/oder Umgebungsdaten kann sodann z. B. das Ermitteln der Fahrsituation des Kraftfahrzeugs 10 erfolgen. Zudem oder alternativ können die entsprechenden Daten jedoch auch im Zusammenhang mit der Optimierung der Betriebsweise, d. h. beim Ermitteln der hinsichtlich des vorgegebenen Zielkriteriums optimale Betriebsweise des Kraftfahrzeugs 10 mittels der ausgewählten Optimierungsmethode, verwendet werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Steuervorrichtung
- 1.1: Erste Kommunikationsschnittstelle
- 1.2: Klassifikationseinheit
- 1.3: Selektoreinheit
- 1.4: Optimiereinheit
- 1.5: Zweite Kommunikationsschnittstelle
- 2.1: Kommunikationseinrichtung
- 2.2: Sensoreinrichtung
- 3: Fahrzeugexterne Einrichtung
- 10: Kraftfahrzeug

## Patentansprüche

1. Verfahren zur Betriebsoptimierung eines Kraftfahrzeugs (10), aufweisend die Schritte:
- Bereitstellen (S₁) einer Mehrzahl von Optimierungsmethoden (M₁, ..., M_{N});
- Ermitteln (S₂) einer Fahrsituation des Kraftfahrzeugs (10);
- Auswählen (S₃) einer Optimierungsmethode aus der bereitgestellten Mehrzahl von Optimierungsmethoden (M₁, ..., M_{N}) in Abhängigkeit der ermittelten Fahrsituation des Kraftfahrzeugs (10); und
- Ermitteln (S₄) einer hinsichtlich eines vorgegebenen Zielkriteriums optimalen Betriebsweise des Kraftfahrzeugs (10) mittels der ausgewählten Optimierungsmethode.

2. Verfahren nach Anspruch 1, wobei das vorgegebene Zielkriterium eine Minimierung von Betriebskosten des Kraftfahrzeugs (10) umfasst.

3. Verfahren nach einem der vorherigen Ansprüche, wobei das Ermitteln (S₄) der optimalen Betriebsweise des Kraftfahrzeugs (10) zumindest einen der folgenden Schritte umfasst:
a) Berechnen einer hinsichtlich des vorgegebenen Zielkriteriums optimalen Geschwindigkeit des Kraftfahrzeugs (10); und
b) Berechnen einer hinsichtlich des vorgegebenen Zielkriteriums optimalen Gangeinstellung des Kraftfahrzeugs (10).

4. Verfahren nach einem der vorherigen Ansprüche, wobei die bereitgestellte Mehrzahl von Optimierungsmethoden (M₁, ..., M_{N}) zumindest eine der folgenden Methoden umfasst:
a) dynamische Programmierung;
b) Heuristik;
c) gradientenbasiertes Newtonverfahren;
d) genetische Optimierung;
e) neuronales Netz; und
f) Monte-Carlo-Simulation.

5. Verfahren nach einem der vorherigen Ansprüche, wobei das Auswählen (S₃) der Optimierungsmethode auf Basis einer vorgegebenen Zuordnung zwischen Optimierungsmethoden und Fahrsituationen, z. B. in Form einer Tabelle, erfolgt.

6. Verfahren nach Anspruch 5, wobei die vorgegebene Zuordnung
a) statisch ist; oder
b) dynamisch ist und vorzugsweise mittels eines neuronalen Netzes ein Adaptieren der vorgegebenen Zuordnung während eines Betriebs des Kraftfahrzeugs (10) erfolgt.

7. Verfahren nach einem der Ansprüche 1 bis 4, wobei das Auswählen (S₃) der Optimierungsmethode den Schritt umfasst:
- Ermitteln (S_{3.1}) einer hinsichtlich eines vorgegebenen weiteren Zielkriteriums optimalen Optimierungsmethode aus der bereitgestellten Mehrzahl von Optimierungsmethoden (M₁, ..., M_{N}).

8. Verfahren nach einem der vorherigen Ansprüche, wobei die Fahrsituation einen Fahrbetrieb und/oder einen vorausliegenden Streckenabschnitt hinsichtlich für die Fahrzeugführung relevanter Gegebenheiten charakterisiert.

9. Verfahren nach einem der vorherigen Ansprüche, ferner aufweisend den Schritt:
- Empfangen von Fahrzeugdaten und/oder Umgebungsdaten, vorzugsweise Streckendaten und/oder Verkehrsdaten;
wobei das Ermitteln (S₂) der Fahrsituation des Kraftfahrzeugs (10) auf Grundlage der empfangenen Fahrzeugdaten und/oder Umgebungsdaten erfolgt.

10. Verfahren nach Anspruch 9, wobei
a) die Fahrzeugdaten zumindest eine der folgenden Informationen betreffend das Kraftfahrzeug (10) umfassen: eine Geschwindigkeit, ein Lenkeinschlag, eine Beschleunigung, und ein Betrieb von Nebenaggregaten; und/oder
b) die Streckendaten zumindest eine der folgenden Informationen zur Fahrstrecke des Kraftfahrzeugs (10) umfassen: eine Steigung, ein Gefälle, eine Krümmung, ein Höhenprofil, eine Anzahl an Fahrspuren, und einen Straßentyp; und/oder
c) die Verkehrsdaten zumindest eine der folgenden Informationen zur Verkehrslage beim Kraftfahrzeugs (10) umfassen: eine Verkehrsdichte, einen Verkehrsfluss, einen Abstand zu einem vorausfahrenden Fahrzeug, ein Unfallaufkommen, und ein Stauaufkommen.

11. Verfahren nach einem der vorherigen Ansprüche, wobei das vorgegebene Zielkriterium unabhängig von der ausgewählten Optimierungsmethode ist; und/oder beim Ermitteln (S₄) der optimale Betriebsweise des Kraftfahrzeugs (10) eine Zielfunktion verwendet wird, die unabhängig von der ausgewählten Optimierungsmethode ist.

12. Verfahren nach einem der vorherigen Ansprüche, wobei das Verfahren in regelmäßigen Zeitabständen und/oder streckenabschnittsweise während eines Betriebs des Kraftfahrzeugs (10) durchgeführt wird.

13. Verfahren nach einem der vorherigen Ansprüche, ferner aufweisend den Schritt:
- Betreiben (S5) des Kraftfahrzeugs (10) gemäß der ermittelten optimalen Betriebsweise.

14. Steuervorrichtung (1), die eingerichtet ist, ein Verfahren nach einem der vorhergehenden Ansprüche auszuführen.

15. Kraftfahrzeug (10), vorzugsweise Nutzfahrzeug, umfassend eine Steuervorrichtung (1) nach Anspruch 14.
